(19) **Europäisches Patentamt**

**European Patent Office**

**Office européen des brevets**

(11) Veröffentlichungsnummer: **0 297 424**
**B1**

(12) **EUROPÄISCHE PATENTSCHRIFT**

(45) Veröffentlichungstag der Patentschrift: **23.01.91**

(21) Anmeldenummer: **88109974.1**

(22) Anmeldetag: **23.06.88**

(51) Int. Cl.⁵: **C 10 B 53/00,** B 01 D 5/00,
C 10 K 1/04

(54) **Verfahren zum Kühlen von heissem Pyrolysegas.**

(30) Priorität: **30.06.87 DE 3721450**

(43) Veröffentlichungstag der Anmeldung:
**04.01.89 Patentblatt 89/01**

(45) Bekanntmachung des Hinweises auf die
Patenterteilung:
**23.01.91 Patentblatt 91/04**

(84) Benannte Vertragsstaaten:
**AT BE CH DE GB IT LI NL SE**

(56) Entgegenhaltungen:
**EP-A-0 167 702**
**DE-B-2 928 676**
**US-A-4 588 477**

(73) Patentinhaber: **Asea Brown Boveri
Aktiengesellschaft
Kallstadter Strasse 1
D-6800 Mannheim-Käfertal (DE)**

(72) Erfinder: **Häuser, Ulrich Dr.
Kettelerstrasse 11
D-6806 Viernheim (DE)**
Erfinder: **Rossol, Gerhard
Johannisplatz 4
D-8192 Geretsried (DE)**

(74) Vertreter: **Rupprecht, Klaus, Dipl.-Ing. et al
c/o BBC Brown Boveri Aktiengesellschaft ZPT
Postfach 100351 Kallstadter Strasse 1
D-6800 Mannheim 1 (DE)**

Courier Press, Leamington Spa, England.

## Beschreibung

Die Erfindung betrifft ein Verfahren zum Kühlen von heißem Pyrolysegas, das bei der Pyrolyse von Kunststoff, Gummi oder andere Kohlenwasserstoffe enthaltendem Abfallmaterial anfällt, in wenigstens zwei vom Pyrolysegas nacheinander durchströmten Kühlstufen, wobei das Pyrolysegas in der ersten Kühlstufe durch ein durch Kondensation von Pyrolysegas gewonnenes Pyrolyseöl in direktem Wärmetausch gekühlt wird.

Bei einem bekannten Verfahren dieser Art wird das 400 bis 1000° C heiße Pyrolysegas, das vorzugsweise durch thermische Zersetzung von Abfallmaterial in einem Wirbelschicht-Pyrolysereaktor gewonnen wird, in der ersten Kühlstufe durch direkten Wärmetausch gekühlt (Deutsche Auslegeschrift 29 28 676). Als Kühlmittel wird hochsiedendes Pyrolyseöl benutzt, das bei der Abkühlung des heißen Pyrolysegases in der ersten Kühlstufe als Kondensat entsteht und in einem Behälter gesammelt wird. Das hochsiedende Pyrolyseöl wird dem Behälter entnommen und mit Hilfe einer Pumpe in das von oben nach unten strömende heiße Pyrolysegas quer zu dessen Strömungsrichtung eingesprüht. Um das hochsiedende Pyrolyseöl auf die für eine wirkungsvolle Kühlung erforderliche niedrige Temperatur zu bringen, wird es vor dem Einsprühen in einem zusätzlichen Kühler gekühlt. Da in dem hochsiedenden Pyrolyseöl der ersten Kühlstufe noch jene Feststoffe und Verschmutzungen enthalten sind, die trotz Filterung vom heißem Pyrolysegas mitgeführt werden, muß das hochsiedende Pyrolyseöl zusätzlich gefiltert werden um eine Verstopfung der Sprühdüsen zu vermeiden. Die zusätzliche Kühlung und Filterung des hochsiedenden Pyrolyseöls machen das bekannte Verfahren aufwendig und erhöhen seine Störanfälligkeit. Zudem können während des Kühlvorganges Verkokungen des hochsiedenden Pyrolyseöls auftreten, so daß die Verkokungsprodukte, vorzugsweise Teer, das Kondensat des heißen Pyrolysegases verschmutzen und/oder sich auf den Wänden der ersten Kühlstufe absetzen, wodurch der Betrieb erheblich gestört wird.

Der Erfindung liegt daher die Aufgabe zugrunde, ein Verfahren der genannten Art anzugeben, das die Nachteile des Standes der Technik überwindet und das bei verringertem Aufwand und mit hoher Betriebssicherheit durchgeführt werden kann und insbesondere den im Betrieb auftretenden Anforderungen voll gewachsen ist.

Die Lösung dieser Aufgabe besteht nun erfindungsgemäß darin, daß in der ersten Kühlstufe ein leichtsiedendes Pyrolyseöl als Kühlmittel benutzt wird, das in der mit indirektem Wärmetausch arbeitenden nachgeschalteten Kühlstufe gewonnen wird. Als Kühlmedium der ersten Kühlstufe wird somit nicht mehr das in der ersten Kühlstufe anfallende hochsiedende Pyrolyseöl sondern das in der der ersten Kühlstufe nachgeschalteten Kühlstufe gebildete, leichtsiedende Pyrolyseöl verwendet. Die nachgeschaltete Kühlstufe wird im folgenden als zweite Kühlstufe bezeichnet, obwohl sie nicht jene Kühlstufe sein muß, die an zweiter Stelle durchströmt wird, sie kann z.B. auch die dritte Kühlstufe sein. Da in der ersten Kühlstufe jene Schmutzteile und Verunreinigungen, die durch das heiße Pyrolysegas vom Pyrolysereaktor her eingeschleppt werden, beim Kühl- und Kondensationsvorgang in das dort anfallende hochsiedende Pyrolyseöl übergehen, und somit nicht in die zweite Kühlstufe gelangen können, ist das in der zweiten Kühlstufe anfallende leichtsiedende Pyrolyseöl weitgehend frei von Fest- und/oder Schmutzstoffen sowie Verkokungsprodukten. Dieses leichtsiedende Pyrolyseöl kann daher der ersten Kühlstufe unmittelbar zugeführt werden, aufwendige Ölfilter oder sonstige Maßnahmen zum Abscheiden von mitgeführten Feststoffen und/oder Verschmutzungen sowie Verkokungsprodukte sind nicht erforderlich. Darüber hinaus ergibt sich noch der wesentliche Vorteil, daß auch eine zusätzliche Kühlung des leichtsiedenden Pyrolyseöles nicht mehr erforderlich ist. Denn in der zweiten Kühlstufe wird das von der ersten Kühlstufe zugeführte restliche Pyrolysegas unter Bildung des leichtsiedenden Pyrolyseöls ohnehin gekühlt. Durch das erfindungsgemäße Verfahren wird somit ein Weg gezeigt, wie auf überraschend einfache Weise heißes Pyrolysegas mit geringem Aufwand und sicher gekühlt wird.

Um die Kühlung und die teilweise Kondensation zu hochsiedendem Pyrolyseöl und die Trennung von restlichem Pyroylsegas und Kondensat zu fördern, ist es empfehlenswert, daß das leichtsiedende Pyrolyseöl ungefähr in axialer Richtung in das obere Ende eines ungefähr vertikal verlaufenden Wärmetauschkanals eingebracht und zusammen mit dem heißen Pyrolysegas im Gleichstrom nach unten zu einem Abscheidebehälter geführt wird. Hier wird das durch Kondensation entstandene hochsiedende Pyrolyseöl und das restliche Pyrolysegas bei einem Temperaturniveau von ungefähr 140 bis 180° C voneinander getrennt. Zur Bildung des Wärmetauschkanals wird zweckmäßig ein Stahlrohr verwendet, dessen Werkstoff den auftretenden Temperaturen gewachsen ist. Im vorliegenden Fall kommt vorzugsweise ein hitzebeständiger Stahl zum Einsatz, der 28 bis 36% Nickel, 16 bis 25% Chrom, 1 bis 5% Titan und 0,1 bis 1% Aluminium enthält. Insbesondere ist der Anteil von Nickel 30 bis 34% und der Anteil von Chrom 18 bis 22%. Die Angaben sind Gewichtsprozente. Ein Stahl dieser Art ist handelsüblich z.B. unter der DIN-Bezeichnung X10CrNiAlTi 3220. In USA trägt ein solcher Stahl unter der Norm UNS die Bezeichnung N 08800. Der Wärmetauschkanal hat vorzugsweise kreisförmigen Querschnitt und eine Länge, die dem 5 bis 10-fachen seiner lichten Weite gleich ist. Falls erforderlich, kann die Kühlung bei Überdruck durchgeführt werden, um ein Sieden des Pyrolyseöls mit Sicherheit zu vermeiden.

Für den Wärmetausch ist es besonders günstig, wenn das leichtsiedende Pyrolyseöl über den Querschnitt des Wärmetauschkanals gleichmäßig verteilt zugeführt wird. Das wird am einfachsten durch wenigstens eine Düse erreicht, die das leichtsiedende Pyrolyseöl fein zerstäubt. Da die Innenseite der Wand des Wärmetauschkanals durch die Sprühdüse mit dem leichtsiedendem Pyrolyseöl benetzt wird, bildet sich dort eine Pyrolyseölschicht, die die gesamte Innenseite bedeckt und die nach unten fließt. Hierdurch wird die Wand gekühlt und zusätzlich eine Ablagerung von Verkokungsprodukten, insbesondere Teerprodukten oder Schmutzstoffen verhindert.

Eine andere empfehlenswerte Weiterbildung der Erfindung besteht darin, daß das hochsiedende Pyrolyseöl und das restliche Pyrolysegas unter Verwendung eines Abscheidebehälters voneinander getrennt werden, und daß das hochsiedende Pyrolyseöl durch eine Filtereinrichtung aus dem Abscheidebehälter abgezogen und als Zwischenprodukt einer Weiterverarbeitung zugeführt wird. Zweckmäßig ist das untere Ende des Wärmetauschrohres an den Abscheidebehälter angeschlossen.

Um die anfallende Kondensations- und Kühlwärme in der zweiten Kühlstufe wirkungsvoll aus dem Prozeß abführen zu können, empfiehlt es sich, daß das Pyrolysegas in der zweiten Kühlstufe in einem Oberflächen-Wärmetauscher mit einem flüssigen Medium, vorzugsweise Kühlwasser, in Wärmetausch gebracht wird. Das in der zweiten Kühlstufe aufgeheizte Kühlwasser wird vorzugsweise in einem Kühlturm durch Umgebunswärme abgekühlt und dann dem Oberflächenwärmetauscher zur erneuten Wärmeaufnahme wieder zugeführt.

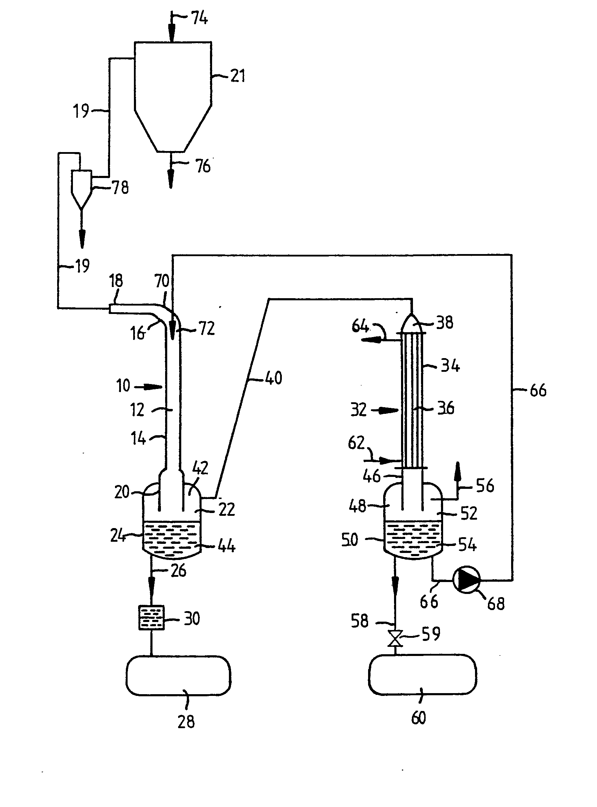

Weitere Vorteile und Merkmale der Erfindung gehen aus der folgenden Beschreibung einer ersten und zweiten Kühlstufe hervor, die für die Durchführung des erfindungsgemäßen Verfahrens geeignet sind und die in der Zeichnung dargestellt sind.

Gemäß der Zeichnung weist die erste Kühlstufe 10 einen vertikal verlaufenden Wärmetauschkanal 12 mit kreisförmigem Querschnitt auf, der von einem Rohr gebildet wird. Die Rohrwand 14 ist aus einem Material hergestellt, das den auftretenden Temperaturen gewachsen ist, das heißt, es muß je nach der Temperatur des Pyrolysegases einer Höchsttemperatur von 400 bis 1000° C gewachsen sein. Ein bevorzugtes Material dieser Art ist weiter oben genannt. Gleiches gilt für sämtliche Leitungen, die diesen hohen Temperaturen ausgesetzt sind. An das obere Ende des Wärmetauschkanals 10 schließt sich unter Zwischenschaltung eines ungefähr rechtwinkligen Kanalbogens 16 ein ungefähr horizontal verlaufendes Kanalstück 18 an, das durch die Leitung 19 mit der Pyrolysegas-Austrittsstelle des Pyrolysereaktors 21 verbunden ist. Im Pyrolysereaktor wird das zugeführte Abfallmaterial in reduzierender Atmosphäre unter Bildung des Pyrolysegases zersetzt und der verbleibende Pyrolyserückstand unten abgezogen. Der Pyrolysereaktor arbeitet vorzugsweise mit einem Wirbelbett, wobei Sand als Wirbelmaterial eingesetzt wird.

Das untere Ende des Wärmetauschkanals weist ein erweitertes, zylindrisches zweites Kanalstück 20 auf, dessen Querschnitt ungefähr 30 bis 70% größer ist als der Querschnitt des Wärmetauschkanals 12. Dieses erweiterte zweite Kanalstück 20 erstreckt sich zentrisch in den Innenraum 22 eines stehenden, zylindrischen Abscheidebehälters 24. Hierbei ragt das zweite Kanalstück auf einer Länge, die ungefähr 1/4 bis 1/3 der lichten Höhe des Abscheidebehälters 24 gleich ist, von oben in den Innenraum 22 und endet im oberen Bereich 42 des Innenraums 22. Am unteren Endbereich des Abscheidebehälters 24 ist eine Rohrleitung 26 angeschlossen, die über eine Filtervorrichtung 30 zu einem Speicherbehälter 28 führt. Der Durchmesser des Abscheidebehälters 24 beträgt das 1,5 bis 4-fache des Durchmessers des zweiten Kanalstückes 20.

Die zweite Kühlstufe 32 weist einen Vertikalrohrwärmetauscher 34 auf, dessen vertikal verlaufende Wärmetauschrohre 36 am oberen Ende in einen Sammelraum 38 münden. Dieser Sammelraum 38 ist durch eine Gasleitung 40 mit dem Innenraum 22 des Abscheidebehälters 24 verbunden. Der Anschluß der Gasleitung 40 erfolgt hierbei im oberen Bereich 42 des Innenraums 22, in dem sich das restliche Pyrolysegas sammelt, wogegen der untere Bereich 44 für die Aufnahme des hochsiedenden Pyrolyseöls vorgesehen ist.

Die Wärmetauschrohre 36 sind in einem vertikalen, zylindrischen Behälter 37 angeordnet. Der Behälter 37 ist unten mit einer Zufuhrleitung 62 und oben mit einer Abfuhrleitung 64 für ein Kühlmittel, vorzugsweise Kühlwasser, versehen. Es ist eine Vielzahl von Wärmetauschrohren 36 vorgesehen.

Am unteren Ende des Vertikalrohrwärmetauschers 34 münden die Wärmetauschrohre 36 gemeinsam in ein vertikal verlaufendes Rohrstück 46, das sich von oben und zentrisch in den Innenraum 48 eines zweiten Abscheidebehälters 50 erstreckt. Der zweite Abscheidebehälter ist ebenfalls zylindrisch und stehend ausgebildet, wobei sich das Rohrstück 46 auf einer Länge in den Innenraum 48 erstreckt, die ungefähr gleich ist 1/3 bis 1/4 der lichten Höhe des zweiten Abscheidebehälters 50. Der zweite Abscheidebehälter weist einen oberen Bereich 52 auf, der als Gasraum dient, wogegen der untere Bereich 54 für die Aufnahme des leichtsiedenden Pyrolyseöles vorgesehen ist. Das Rohrstück 46 endet im oberen Bereich 52, ebenso wie das zweite Kanalstück 20 im oberen Bereich 42 des Innenraums 22 endet. Am oberen Bereich 52 des zweiten Abscheidebehälters 50 ist eine Rohrleitung 56 angeschlossen, die zu einem nicht dargestellten Gasbehälter führt. Der untere Bereich 54 ist durch eine Rohrleitung 58 mit einem zweiten Speicherbehälter 60 verbunden, der für die Aufnahme des überschüssigen, leichtsiedenden Pyrolyseöls vorgesehen ist. Hierbei ist ein Absperrund Regelventil 59 in die Leitung 58 eingefügt. Die unteren Bereiche 44 und 54 haben jeweils eine Höhe, die gleich ist dem 0,3 bis 0,5-fachen der Höhe der Innenräume 22 bzw. 52.

Der mit indirektem Wärmetausch arbeitende Vertikalrohrwärmetauscher 34 weist an seinem unteren Ende eine Zufuhrleitung 62 für das Kühlmedium, vorzugsweise Kühlwasser, auf, wogegen am oberen Ende eine Abfuhrleitung 64 vorgesehen ist, durch die das Kühlmedium austritt.

An den unteren Bereich 54 des zweiten Abscheidebehälters 50, in welchem sich das leichtsiedende Pyrolyseöl ansammelt, ist eine Ölleitung 66 angeschlossen, in die eine Pumpe 68 eingefügt ist. Diese Ölleitung 66 führt zur ersten Kühlstufe 10 und mündet dort in den Bogen 16, der den Wärmetauschkanal 12 mit dem horizontal verlaufenden Kanalstück 18 verbindet. Die gerade verlaufende Ölleitung 66 ist hierbei auf der gestreckten Seite 70 des Bogens 16 und zentrisch zum Wärmetauschkanal 12 ein kurzes Stück in den Bogen 16 eingeführt und endet im Bereich des Bogens. Das Ende der Ölleitung 66 ist hierbei mit wenigstens einer Sprühdüse 72 versehen, die das zugeführte leichtsiedende Pyrolyseöl gleichmäßig über den Querschnitt des Wärmetauschkanals 12 in Form von sehr kleinen Tropfen, insbesondere nebelförmig, versprüht. Die Sprührichtung der Sprühdüse 72 ist vertikal nach unten zum Abscheidebehälter 24 ausgerichtet.

Während des Betriebs wird das in Richtung des Pfeiles 74 in den Pyrolysereaktor 21 eingebrachte Abfallmaterial in einem auf 400 bis 1000°C aufgeheizten Wirbelbett entgast und der verbleibende Pyrolyserückstand in Richtung des Pfeiles 76 nach unten aus dem Pyrolysereaktor abgezogen. Das bei der Entgasung entstandene heiße Pyrolysegas verläßt mit einer Temperatur von 400 bis 1000° C, vorzugsweise 600 bis 800° C, den Pyrolysereaktor und wird durch die Leitung 19, das Kanalstück 18 und den Bogen 16 in den Wärmetauschkanal 12 der ersten Kühlstufe 10 eingebracht. Gleichzeitig wird durch die Ölleitung 66 mit Hilfe der Pumpe 68 leichtsiedendes Pyrolyseöl aus dem zweiten Abscheidebehälter 50 in den oberen Endbereich des Wärmetauschkanals 12 eingebracht und mit Hilfe einer oder mehrerer Sprühdüse 72 nebelförmig versprüht, so daß eine innige Mischung von heißem Pyrolysegas und leichtsiedendem Pyrolyseöl erfolgt. Diese Mischung strömt im Wärmetauschkanal 12 nach unten, wobei eine Kühlung des heißen Pyrolysegases durch Verdampfung des zugeführten leichtsiedenden Pyrolyseöles erfolgt. Diese Kühlung bewirkt die Kondensation der hochsiedenden Bestandteile des Pyrolysegases, die als hochsiedendes Pyrolyseöl anfallen und zusammen mit dem restlichen Pyrolysegas nach unten in den Abscheidebehälter 24 strömen. Hier sammelt sich das hochsiedende Pyrolyseöl im unteren Bereich 44, wogegen das restliche Pyrolysegas sich darüber im oberen Bereich 42 befindet. Da das Pyrolysegas nur auf eine Temperatur von ungefähr 110 bis 180° Celsius, vorzugsweise 140 bis 180° Celsius abgekühlt wird, liegt das zu Kühlzwecken zugeführte leichtsiedende Pyrolyseöl in gasförmiger Form vor und ist ein Bestandteil des im oberen Bereich 42 vorhandenen restlichen Pyrolysegases.

Durch die Gasleitung 40 wird das restliche Pyrolysegas der zweiten Kühlstufe 32 zugeführt und tritt durch den Sammelraum 38 in die Kühlrohre 36 des Vertikalrohrwärmetauschers 34 ein. Hier strömt es unter Abkühlung auf eine Temperatur von ungefähr 30 bis 70° C, vorzugsweise 20 bis 60° Celsius nach unten, wobei die leichtsiedenden Bestandteile des restlichen Pyrolysegases als leichtsiedendes Pyrolyseöl ausfallen. Das leichtsiedende Pyrolyseöl sammelt sich im unteren Bereich 54 des zweiten Abscheidebehälters 50, die nicht kondensierten Restgase sammeln sich im oberen Bereich 52 und werden durch die Rohrleitung 56 einem nicht dargestellten Gasbehälter zur weiteren Verwendung zugeführt, insbesondere als Brenngas. In manchen Fällen ist es zweckmäßig, in die Rohrleitung 56 noch eine weitere Kühlstufe für indirekte Kühlung und/oder einen Gaswäscher einzufügen. Dies ist in der Zeichnung nicht gezeigt.

Da die Kühlung im Vertikalrohrwärmetauscher 34 im Gegenstrom erfolgen soll, wird Kühlwasser durch die Zufuhrleitung 62 in den unteren Bereich eingeleitet, so daß es unter Wärmeaufnahme nach oben zur Abfuhrleitung 64 strömt. Hierbei umspült das Kühlwasser die Kühlrohre 36.

Das im Abscheidebehälter 24 sich sammelnde hochsiedende Pyrolyseöl wird durch die Rohrleitung 26 abgezogen und durch eine Filtervorrichtung 30 in einen Speicherbehälter 28 geleitet. Dieses hochsiedende Pyrolyseöl wird dann zu Endprodukten, insbesondere Schmieröl, weiterverarbeitet. Auf die gleiche Weise wird das nicht für Kühlzwecke benötigte leichtsiedende Pyrolyseöl aus dem zweiten Abscheidebehälter 50 durch die Rohrleitung 58 abgeführt und im zweiten Speicherbehälter 60 angesammelt. Auch dieses leichtsiedende Pyrolyseöl ist ein wertvoller Rohstoff, der weiterverarbeitet werden kann, z.B. zu Schmieröl.

Bei der direkten Kühlung des heißen Pyrolysegases im Wärmetauschkanal 12 wird auch eine Reinigung des heißen Pyrolysegases von jenen Verschmutzungen und Feststoffen erreicht, die von der Reinigungsvorrichtung 78, welche in die Leitung 19 eingefügt ist, nicht zurückgehalten werden. Die Reinigungsvorrichtung 78 besteht vorzugsweise aus einem Zyklonabscheider. Die in der ersten Kühlstufe 10 abgeschiedenen Feststoffe und Verunreinigungen befinden sich im hochsiedenden Pyrolyseöl, das sich im unteren Bereich 44 des ersten Abscheidebehälters ansammelt. Daher muß das hochsiedende Pyrolyseöl gefiltert werden, bevor es in den Speicherbehälter 28 eingeleitet wird.

Das im oberen Bereich 42 des ersten Abscheidebehälters 24 sich sammelnde restliche Pyrolysegas ist dagegen frei von Verschmutzungen, so daß bei der teilweisen Kondensation dieses restlichen Pyrolysegases in der zweiten Kühlstufe 32 ein weitgehend sauberes leichtsiedendes Pyrolyseöl anfällt. Dieses leichtsiedende Pyrolyseöl kann daher ohne weitere Reinigung direkt als Kühlmedium der ersten Kühlstufe 10 zugeführt werden. Hierdurch ist der Aufwand erheblich verringert. Da zudem das leichtsiedende Pyrolyseöl ohnehin eine niedrige Temperatur aufweist, sind für seinen Einsatz als Kühlmittel zudem keine zusätzlichen Kühler erforderlich, wodurch der Aufwand weiter verringert ist.

Hochsiedendes Pyrolyseöl im Sinne vorliegender Erfindung besitzt bei Umgebungsdruck eine Siedetemperatur von 140 bis 250° C, vorzugsweise 150 bis 180° C. Die Siedetemperatur des leichtsiedenden Pyrolyseöls liegt darunter und beträgt vorzugsweise 60 bis 140° C, besonders bevorzugt 60 bis 120° C und insbesondere 20 bis 60° C.

Zusammenfassend kann über die Erfindung gesagt werden: Bei einem mehrstufigen Kühlverfahren für heißes Pyrolysegas, das durch Entgasung von Kunststoffabfällen oder dergleichen in einem Pyrolysereaktor entsteht, wird das heiße Pyrolysegas in der unmittelbar dem Pyrolysereaktor nach geschalteten ersten Kühlstufe durch direkten Wärmetausch gekühlt. Als Kühlmedium dient hierbei ein leichtsiedendes Pyrolyseöl, das durch Kondensation von Pyrolysegas in einer Kühlstufe gewonnen wird, welche der ersten Kühlstufe nachgeschaltet ist. Hierdurch sind besondere Kühl- und Reinigungsmaßnahmen für das leichtsiedende Pyrolyseöl, das für die Kühlung in der ersten Kühlstufe eingesetzt wird, nicht erforderlich. Zudem wird einer Bildung von Verkokungsprodukten, wie sie bei der Kühlung des heißen Pyrolysegases im hochsiedenden Pyrolyseöl auftreten, entgegengewirkt.

Der Pyrolysereaktor 21 ist so aufgebaut, wie es z.B. in der Druckschrift DE—A—35 23 653 oder in der US-Anmeldung Serial Nr. 033 392 beschrieben ist.

## Patentansprüche

1. Verfahren zum Kühlen von heißem Pyrolysegas, das bei der Pyrolyse von Kunststoff, Gummi oder andere Kohlenwasserstoffe enthaltendem Abfallmaterial anfällt, in wenigstens zwei von Pyrolysegas nacheinander durchströmten Kühlstufen (10, 32), wobei das Pyrolysegas in der ersten Kühlstufe (10) durch ein durch Kondensation von Pyrolysegas gewonnenes Pyrolyseöl in direktem Wärmetausch gekühlt wird, dadurch gekennzeichnet, daß in der ersten Kühlstufe (10) ein leichtsiedendes Pyrolyseöl als Kühlmittel benutzt wird, das in der mit indirektem Wärmetausch arbeitendem zweiten Kühlstufe (32) gewonnen wird.

2. Verfahren nach Anspruch 1, dadurch gekennzeichnet, daß das leichtsiedende Pyrolyseöl ungefähr in axialer Richtung in das obere Ende eines ungefähr vertikal verlaufenden Wärmetauschkanals (12) eingebracht und zusammen mit dem heißem Pyrolysegas im Gleichstrom nach unten zu einem Abscheidebehälter (24) geführt wird, in dem das durch Kondensation entstandene hochsiedende Pyrolyseöl und das restliche Pyrolysegas bei einem Temperaturniveau von ungefähr 140 bis 180° Celsius voneinander getrennt werden.

3. Verfahren nach Anspruch 2, dadurch gekennzeichnet, daß das leichtsiedende Pyrolyseöl über dem Querschnitt des Wärmetauschkanals (12) verteilt zugeführt wird.

4. Verfahren nach Anspruch 2 oder 3, dadurch gekennzeichnet, daß das hochsiedende Pyrolyseöl und das restliche Pyrolysegas unter Verwendung eines Abscheidebehälters (24) voneinander getrennt werden, und daß das hochsiedende Pyrolyseöl durch eine Filtereinrichtung (30) aus dem Abscheidebehälter (24) abgezogen und als Zwischenprodukt einer Weiterverarbeitung zugeführt wird.

5. Verfahren nach mindestens einem der Ansprüche 1 bis 4, dadurch gekennzeichnet, daß das Pyrolysegas in der zweiten Kühlstufe (32) in einem Oberflächenwärmetauscher (Vertikalrohrwärmetauscher 34) mit einem flüssigen Kühlmedium, vorzugsweise Kühlwasser, gekühlt wird.

6. Verfahren nach mindestens einem der Ansprüche 1 bis 5, dadurch gekennzeichnet, daß das leichtsiedende Pyrolyseöl mit einer Temperatur von 20 bis 60°C als Kühlmittel eingesetzt wird.

## Revendications

1. Procédé pour refroidir du gaz de pyrolyse chaud résultant de la pyrolyse de matière synthétique, de caoutchouc ou d'autres matériaux de récupération contenant des hydrocarbures, avec au moins deux étages de refroidissement (10, 32) traversés successivement par le gaz de pyrolyse, dans lequel le gaz de pyrolyse est refroidi dans le première étage de refroidissement (10) par échange thermique direct au moyen d'une huile de pyrolyse obtenue par condensation du gaz de pyrolyse, caractérisé en ce qu'on utilise, comme produit réfrigérant dans le premier étage de refroidissement (10), une huile de pyrolyse ayant un bas point d'ébullition, qui est obtenue dans le deuxième étage de refroidissement (32) fonctionnant par échange thermique indirect.

2. Procédé selon la revendication 1, caractérisé en ce que l'huile de pyrolyse à bas point d'ébullition est introduite, approximativement en direction axiale, à l'extrémité supérieure d'un canal d'échange de chaleur (12) orienté à peu près verticalement, et est dirigée vers le bas, en cocourant avec le gaz de pyrolyse chaud, dans un récipient séparateur (24) dans lequel l'huile de pyrolyse à haut point d'ébullition, formée par condensation, et le gaz de pyrolyse résiduel sont séparés l'un de l'autre à une température comprise dans une plage d'environ 140 à 180°C.

3. Procédé selon la revendication 2, caractérisé en ce que l'huile de pyrolyse à bas point d'ébullition est introduite en étant répartie sur la section transversale du canal d'échange de chaleur (12).

4. Procédé selon la revendication 2 ou 3, caractérisé en ce que ce qu'on sépare l'huile de pyrolyse à haut point d'ébullition du gaz de pyrolyse résiduel en utilisant un récipient séparateur (24) et que l'on extrait l'huile de pyrolyse à haut point d'ébullition du récipient séparateur (24) à travers un dispositif filtrant (30) et qu'on la dirige vers un traitement complémentaire en tant que produit intermédiaire.

5. Procédé selon au moins l'une des revendications 1 à 4, caractérisé en ce que le gaz de pyrolyse est refroidi, dans le deuxième étage de refroidissement (32), dans un échangeur de chaleur par surface (échangeur de chaleur 34 à tubes verticaux) au moyen d'un liquide réfrigérant, de préférence de l'eau de refroidissement.

6. Procédé selon au moins l'une des revendications 1 à 5, caractérisé en ce que l'huile de pyrolyse à bas point d'ébullition est mise en oeuvre, comme produit réfrigérant, à une température comprise entre 20 et 60°C.

## Claims

1. Process for cooling hot pyrolysis gas, obtained in the pyrolysis of plastic, rubber or waste material containing other hydrocarbons, in at least two cooling stages (10, 32), through which the pyrolysis gas flows consecutively, the pyrolysis gas being cooled in the first cooling stage (10) by direct heat exchange with a pyrolysis oil obtained by condensation of pyrolysis gas, characterized in that the coolant used in the first cooling stage (10) is a low-boiling pyrolysis oil which is obtained in the second cooling stage (32) operated with indirect heat exchange.

2. Process according to Claim 1, characterized in that the low-boiling pyrolysis oil is introduced in approximately the axial direction into the upper end of an approximately vertically extending heat exchange channel (12) and is passed together with the hot pyrolysis gas in co-current downwards to a separator vessel (24), in which the high-boiling pyrolysis oil produced by condensation and the remaining pyrolysis gas are separated from one another at a temperature level of about 140 to 180° Celsius.

3. Process according to Claim 2, characterized in that the low-boiling pyrolysis oil is fed in distribution over the cross-section of the heat exchange channel (12).

4. Process according to Claim 2 or 3, characterized in that the high-boiling pyrolysis oil and the remaining pyrolysis gas are separated from one another using a separator vessel (24), and that the high-boiling pyrolysis oil is taken off from the separator vessel (24) through a filter device (30) and passed as an intermediate to further processing.

5. Process according to at least one of Claims 1 to 4, characterized in that the pyrolysis gas is cooled in the second cooling stage (32) in a surface heat exchanger (vertical tube bundle heat exchanger 34) by a liquid cooling medium, preferably cooling water.

6. Process according to at least one of Claims 1 to 5, characterized in that the low-boiling pyrolysis oil is used as coolant at a temperature of 20 to 60°C.